# EUROPEAN PATENT APPLICATION

(11) **EP 1 204 239 A2**
(43) Date of publication of application: **08.05.2002**
(21) Application number: 01309083.2
(22) Date of filing: 25.10.2001
(51) Int. Cl.: H04L 12/18, H04H 1/00

(54) **System for receiving audio or video broadcasts from the Internet**

(30) Priority: 01.11.2000 US 704480
(71) Applicant: Hewlett-Packard Company, Palo Alto, CA 94304 (US)
(72) Inventor: Krishnan, Venkatesh, Sunnyvale, CA 94087 (US); Morgan, Jeffrey A., Cupertino, CA 95014 (US)
(74) Representative: Jehan, Robert

(57) **Abstract**

An Internet radio/video receiver system (20) includes a request module (29) that sends a request to an external Internet radio/video station via Internet for its broadcasting content. The system (20) also includes a radio/video subsystem (21) that receives the broadcasting content from the external Internet radio/video station via the Internet, and plays the broadcasting content. A remote control receiver (26) is coupled to the request module and the radio/video subsystem (21) and receives control inputs and web addresses from an external client system (9), and sends the control inputs to the radio/video subsystem (21) and the web addresses to the request module (29).

## Description

The present invention relates to an Internet radio/video receiver system with remote control and input functions which can receive web addresses of desired Internet radio stations or video suppliers remotely and can be remotely controlled or operated.

With the rapid growth of the Internet and widespread use of World Wide Web (WWW), a wide variety of new Internet-based media delivery platforms has been developed. Internet radio is just one example of such platforms. Under this platform, the broadcaster only needs to employ a special audio web server at the radio station to broadcast audio signals over the Internet. The special audio web server is typically referred to as an Internet radio station. The broadcast from the Internet radio station can be picked up by any computer system equipped with web browsing and audio processing and playing capabilities and is connected to the Internet (i.e., on-line).

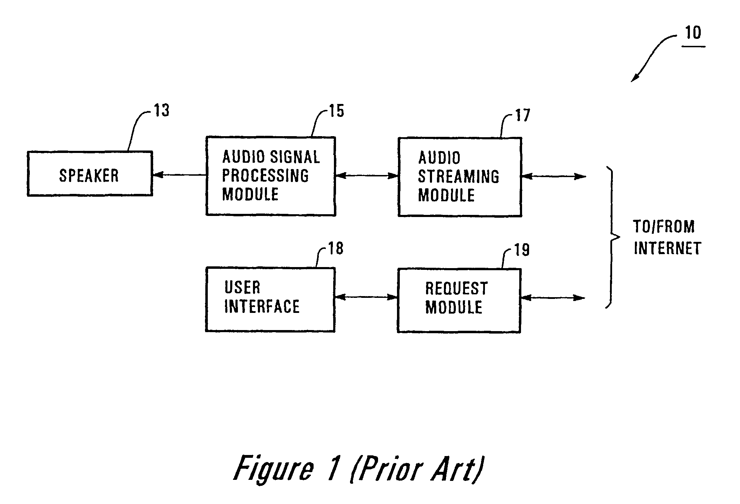

To further facilitate accesses to Internet radio broadcasting, Internet radio appliances have been developed. An Internet radio appliance is basically a radio receiver with Internet access and browsing capability. Figure 1 schematically illustrates the structure of one such appliance. As can be seen from Figure 1, the Internet radio receiver system 10 includes a request module 19 that is used to *"tune"* the Internet radio receiver system 10 to a particular Internet radio station (not shown in Figure 1). The *"tuning"* is done by having the request module 19 send an HTTP request to the desired Internet radio station via the Internet. Once the request module 19 causes the Internet radio receiver system 10 to be *"tuned"* to the desired Internet radio station, an audio streaming module 17 in the Internet radio receiver system 10 receives the audio broadcast content from the desired Internet radio station via the Internet. The audio broadcast content is typically encoded in a known audio format (e.g., MP3). The audio streaming module 17 streams the audio broadcast content. The streamed audio signal is then sent to the audio signal processing module 15 for audio signal processing before the audio signal is played by the speaker 13 of the Internet radio receiver system 10. The audio signal processing is basically conventional audio signal processing (e.g., amplification, frequency equalisation, and surround sound processing). A user interface 18 is also employed in the Internet radio receiver system 10 to allow a listener of the system 10 to input web addresses of desired Internet radio stations into the request module 19.

One advantage of the Internet radio platform is that it typically lowers the barrier for audio broadcasting. This is due to the fact that in order for the broadcasting to happen, the broadcaster only needs to have the special audio web server connected to the Internet. There is no need for the broadcaster to spend huge capital on equipment able to send audio signals into the ether.

In addition, the Internet radio platform allows listeners at any geographical location to listen to any radio broadcast (as long as they are connected to the Internet), thus breaking down geographical boundaries. The third advantage of the Internet radio platform is that there is no limit to the number of radio stations allowed in one area. As is known, each conventional air-wave radio station must be assigned a frequency by a regulatory government agency (for example the FCC). For Internet broadcasting, there is no frequency allocation for each Internet radio station. Each station only needs to have a web address.

However, disadvantages are still associated with such prior art Internet radio appliances. One disadvantage is that they do not provide an easy and convenient way for a listener to *"tune"* the Internet radio appliance to a desired Internet radio station. If the listener wants to *"tune"* to a desired Internet radio station, the listener must manually input the web address of the desired Internet radio station into the Internet radio appliance, or access the appliance from a personal computer through a user interface. As is known, web addresses are not easy to remember and can be long (especially if the web address points to a specific web page (or radio program) within the Internet radio station). One reason for long and confusing web addresses is that their corresponding web pages are typically transient and need to be changed on a regular basis as time advances. Mistakes also typically occur when the listener manually inputs the long web addresses.

The present invention seeks to provide improved operation of Internet radio and video functions.

According to an aspect of the present invention, there is provided an Internet radio/video receiver system as specified in claim 1.

The preferred embodiment can allow easy and convenient operation of an Internet radio/video receiver system. It can also allow the listener of an Internet radio/video receiver system to conveniently *"tune"* the system to a desired Internet radio station (or a particular broadcast of the Internet radio station, or a particular Internet video supplier which can also be referred to as Internet video station).

Advantageously, it is also possible electronically and remotely to input the web address of an Internet radio/video station into the Internet radio/video receiver system.

Below described is an embodiment of Internet radio/video receiver system that includes a request module that sends a request to an external Internet radio/video station via Internet for its broadcasting content. The Internet radio/video receiver system also includes a radio/video subsystem that receives the broadcasting content from the external Internet radio/video station via the Internet, and plays the broadcasting content. A remote control receiver is coupled to the request module and the radio/video subsystem. The remote control receiver receives control inputs and web addresses from an external client system, and sends the control inputs to the radio/video subsystem and the web addresses to the request module.

Embodiments of the present invention are described below, by way of example only, with reference to the accompanying drawings, in which:
Figure 1 shows a prior art Internet radio appliance;
Figure 2 shows the structure of an embodiment of Internet radio receiver system that can receive control inputs and web addresses from an external client system which includes a client program for sending the control inputs and web addresses to the Internet radio receiver system;
Figure 3 shows in flow chart diagram form the process of the client program of the client system of Figure 2; and
Figure 4 shows the structure of the remote control receiver of the Internet radio receiver system of Figure 2.

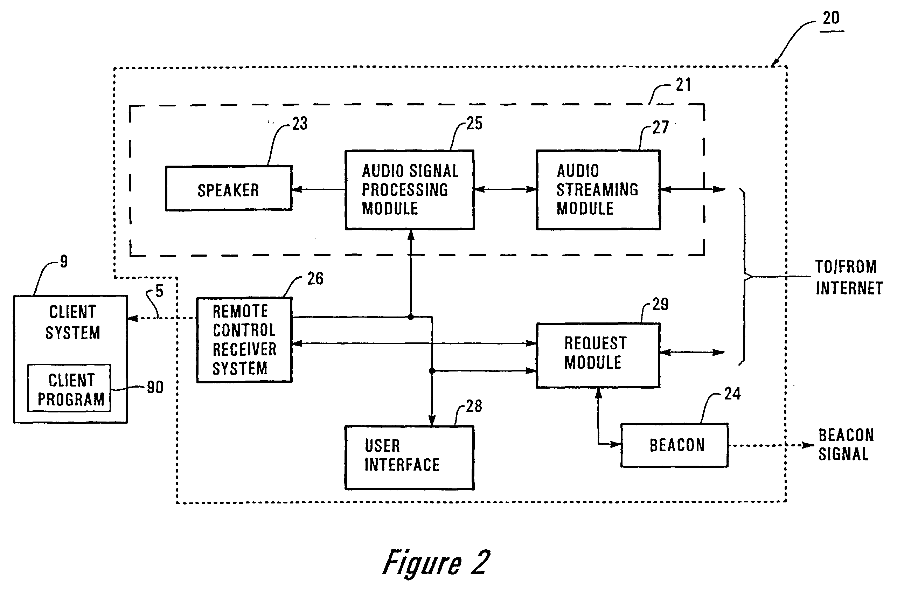

Figure 2 shows an Internet radio receiver system 20 that includes a remote control receiver system 26 in accordance with one embodiment of the present invention. As is described in more detail below, the Internet radio receiver system 20 can also be an Internet video receiver system.

The remote control receiver system 26 allows the listener of the Internet radio receiver system 20 to remotely, conveniently, and electronically control the operation of the Internet radio receiver system 20. The controlled operations include inputting web addresses to the Internet radio receiver system 20 so that the Internet radio receiver system 20 can be *tuned* (meaning switching from one Internet radio station to another) to different Internet radio stations. The controlled operations also include controlling various audio broadcasting functions of the Internet radio receiver system 20. The remote control receiver system 26 is described in more detail below in conjunction with Figures 2-4.

Referring to Figure 2, the Internet radio receiver system 20 is used as an Internet radio appliance to receive audio broadcast from any external Internet radio station via the Internet (both not shown in Figure 2). As described above, an Internet radio station is basically a web server connected to the Internet. The web server contains audio processing capability that allows the web server to send audio broadcast to a requesting client system or Internet radio appliance (e.g., the Internet radio receiver system 20) via the Internet. Here, the term audio broadcast refers to the use of transport protocols such as HTTP and Multi-cast to transfer audio streams via Internet or any other suitable protocols existing now or developed in the future. When accessed by a client system or an Internet radio appliance such as the Internet radio receiver system 20, the Internet radio station encodes its audio broadcast content in a known format (e.g., MP3) and then sends the encoded content over onto the Internet to be received by the requesting system or appliance.

The Internet radio receiver system 20, when connected to the Internet (i.e., on-line) and accessing a desired Internet radio station, receives the audio broadcast from that Internet radio station. When the listener of the Internet radio receiver system 20 wishes to listen to the broadcast of another Internet radio station, the Internet radio receiver system 20 sends a request with the web address of that other Internet radio station over the Internet. This allows the Internet radio receiver system 20 to be "connected" to the other Internet radio station and thus to receive the audio broadcast of the other Internet radio station. This process is similar to the *tuning* for a conventional radio receiver, and thus is referred to as *Internet radio tuning.*

Alternatively or additionally, the receiver system that embodies the remote control receiver system 26 can be an Internet video receiver system. In this case, the Internet video receiver system is used as an Internet video receiver system (or Internet TV) to receive video broadcast from any external Internet video or TV station via the Internet. An Internet video or TV station is basically a web server connected to the Internet. The web server can send video broadcast to a requesting Internet video receiver system via the Internet. Here, the term video broadcast refers to the use of transport protocol such as HTTP and Multi-cast to transfer video streams over Internet. When accessed by a client system or an Internet video receiver system, the Internet video station encodes its video broadcast content in a known format and then sends the encoded content over onto the Internet to be received by the requesting system or appliance. Thus, the Internet radio receiver system 20 can also be referred to as an Internet radio/video receiver system 20 or simply Internet receiver system 20.

As can be seen in Figure 2, the Internet radio receiver system 20 includes a radio subsystem 21, a request module 29, a user interface 28 connected to the request module 29, a URL beacon 24 connected to the request module 29, and a remote control receiver system 26. In one embodiment, the URL beacon 24 and the remote control receiver system 26 are two physically separate modules. In another embodiment, the URL beacon 24 and the remote control receiver system 26 are integrated into a single physical module that can be implemented by a combination of hardware and software.

In one embodiment, all of the modules 21, 24, 26, and 28-29 reside within a single enclosure of the system 20. Alternatively, the modules 21, 24, 26, and 28-29 may reside in different enclosures. As a further embodiment, some of the modules 21, 24, 26, and 28-29 may be attached to the enclosure.

The radio subsystem 21 includes an audio streaming module 27, an audio signal processing module 25, and a speaker 23. The speaker 23 may include more than one audio speaker, and may be able to play stereo or surround sounds. The structure of each of the modules 23, 25, and 27 is known and is not described in detail herein.

The basic function of the audio subsystem 21 is to process audio broadcast streams received into audio broadcast signals and to play the audio broadcast signals through the speaker 23 to its listener. External control inputs are applied to the audio signal processing module 25 to control the volume of the audio broadcast through the speaker 23. The external control inputs can also be applied to the audio signal processing module 25 to control how the audio broadcast is played to the listener through the speaker 23. For example, the audio signal processing module 25 can control the audio broadcast to be played in stereo or surround sound mode. The audio signal processing module 25 can also be controlled to compensate some frequencies of the audio broadcast (e.g., add base). The audio signal processing module 25 can also be controlled to turn its noise reduction function on or off. These operations are all controlled by the external control inputs.

In one embodiment, the audio signal processing module 25 receives the external control inputs from an user interface 28. The user interface 28 is used to allow listener of the Internet radio receiver system 20 to apply control inputs to the audio signal processing module 25. The user interface 28 can be implemented using any known technology.

If the receiver system 20 is implemented as an Internet video receiver system, then the audio subsystem 21 is replaced with a video receiving and displaying subsystem which essentially contain the basic elements of a television set. For example, the video subsystem will include a video streaming module, a video signal processing module, a display, an audio signal processing module and speakers. These modules or elements are well known in the art and are not described in detail. Below, the subsystem 21 is described as an audio subsystem 21 but the skilled person will readily appreciate the structure of an equivalent video system.

In accordance with one embodiment, the audio signal processing module 25 of the audio subsystem 21 receives the external control inputs from a client system external (e.g., the client system 9) to the Internet radio receiver system 20 via the remote control receiver system 26. As can be seen from Figure 2, the remote control receiver system 26 is connected to the audio signal processing module 25. Using the remote control receiver system 26, the listener can remotely, conveniently, and electronically transmit the control inputs to the Internet radio receiver system 20. This embodiment will be described in more detail below.

The request module 29 is used to *tune* the Internet radio receiver system 20 to a desired Internet radio station. This means that the request module 29 is used to request a connection with the desired Internet radio station. Once a connection is established between the Internet radio receiver system 20 and the desired Internet radio station, the desired Internet radio station sends audio broadcast content or program to the Internet radio receiver system 20 via the Internet. The audio streaming module 27 of the audio subsystem 21 is employed to receive and stream the audio broadcast content from the external Internet radio station. The streaming is required because the audio broadcast content is encoded in a known audio format (e.g., MP3). If the audio subsystem 21 is replaced with a video subsystem, then other known video encoding formats may be employed.

The streamed audio data is then applied to the audio signal processing module 25 for audio signal processing before the audio signal is played by the speaker 23. The audio signal processing is basically conventional audio signal processing (e.g., amplification, frequency equalisation, and surround sound processing).

To establish a connection with a desired Internet radio station, the request module 29 of the Internet radio receiver system 20 generates and sends a request (e.g., Universal Resource Locator) to the external Internet radio station via the Internet. The request module 29 generates and sends the request using an open standard communication protocol (for example, Hyper Text Transport Protocol). Thus, the request module 29 of this embodiment can also be referred to as the HTTP module. The request module 29 is like a web browser that does not have the image rendering function. The request typically contains the web address of the desired Internet radio station.

One way for the request module 29 to receive the web address of the desired Internet radio station is through the user interface 28. In this case, the user interface 28 allows the listener of the Internet radio receiver system 20 to input web addresses to the request module 29.

In accordance with one embodiment, another way of inputting web addresses to the request module 29 is through the remote control receiver system 26. Using the remote control receiver system 26, the listener of the Internet radio receiver system 20 can send the web addresses electronically through an external client system (e.g., the client system 9), thus allowing the listener to remotely, conveniently, and electronically control the operation of the Internet radio receiver system 20. This is described in more detail below.

As can be seen in Figure 2, the client system 9 is used to remotely and electronically send the control inputs to the remote control receiver system 26. As described above, the control inputs that can be sent from the client system 9 to the remote control receiver system 26 include web addresses of Internet radio stations and other control functions (e.g., power on and off, volume control, play mode control, frequency compensations, etc.). This allows the listener of the Internet radio receiver system 20 to remotely, conveniently, and electronically control the operation of the Internet radio receiver system 20.

The client system 9 is a portable handheld electronic device that is relatively very easy to carry. In one embodiment, the client system 9 is a pager or a watch. In another embodiment, the client system 9 is a cellular phone or wireless satellite phone. In a further embodiment, the client system 9 is a palm-top computer system or personal organiser. The client system 9 can be any kind of information appliance. Alternatively, the client system 9 can be any kind of small and portable handheld electronic device or appliance with limited processing, storage, and display resources.

The client system 9 has a local communication module (not shown) for communications with the remote control receiver system 26. The communication module of the client system 9 transmits the control inputs to the remote control receiver system 26 of the Internet radio receiver system 20. This transmission can be via a wireless communication link or channel 5 using a simple and open standard communication protocol (e.g., the protocol used in remote controls). The protocol is simple because it only needs to handle sending a few bytes of data.

In one embodiment, the communication link 5 employs radio frequency communication. In another embodiment, the communication link 5 is an infrared communication link. Alternatively, other wireless or wire communication means may be used.

The client system 9 also includes a storage module (also not shown in Figure 2) that stores web addresses. The storage module can be a volatile or non-volatile storage means. The storage module of the client system 9 can receive web addresses from external devices (not shown). The stored web addresses can also be inputted by the listener manually. The client system 9 may also include hardware of a radio remote control to generate the control inputs for controlling the audio broadcast operation of the audio subsystem 21 of the Internet radio receiver system 20. The radio remote control hardware of the client system 9 is also connected to the communication module of the client system 9.

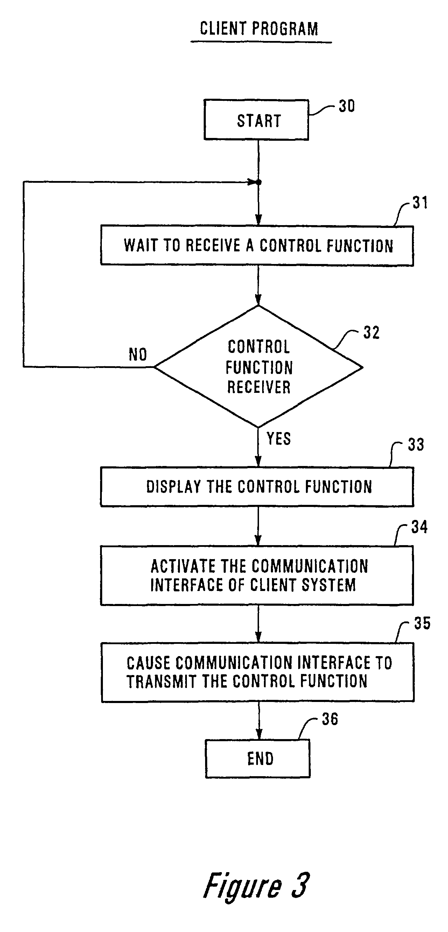

The client system 9 also includes a client program 90 which is used to cause the communication module of the client system 9 to send the control inputs to the remote control receiver system 26 of the Internet radio receiver system 20. As described above, the control inputs also include web addresses. The web addresses can be the standard URL addresses or embedded in hyperlinks. Figure 3 shows in flow chart diagram form the process of the client program 90, which is described in more detail below.

As can be seen from Figures 2-3, the process starts at the step 30. At the steps 31 and 32, the client program 90 waits to receive the selected control inputs to be transmitted to the remote control receiver system 26 of the Internet radio receiver system 20. As the step 33, the received control inputs are displayed on the client system 9 and acknowledged by the client program 90. At the step 34, the client program 90 causes the communication module of the client system 9 to establish communication link between the client system 9 and the receiver system 26. Then the client program 90 sends the received control inputs to the receiver system 26 via the established communication link at the step 35. The process then ends at the step 36.

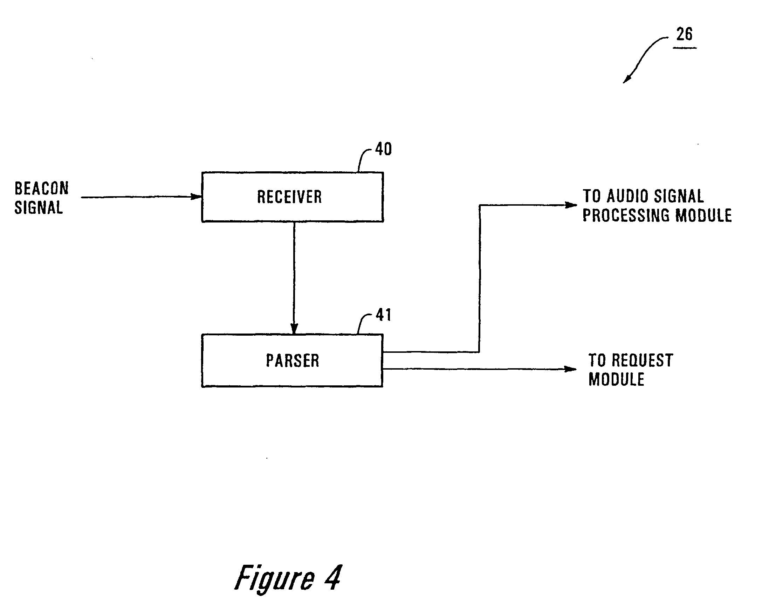

Referring back to Figure 2, the remote control receiver system 26 is used to establish communication link with the client system 9 and to receive the control inputs from the client system 9. The receiver system 26 can be maintained at receiving mode all the time or can be activated by the user of the client system 9. Once the control inputs are received, the receiver system 26 separates the regular audio broadcast control functions from web addresses. The receiver system 26 sends the web addresses to the request module 29 and sends the regular audio broadcast control functions to the audio subsystem 21. Figure 4 shows the structure of the receiver system 26, which are described in more detail below.

As can be seen from Figure 4, the receiver system 26 includes a receiver 40 and a parser 41. The receiver 40 can be implemented using any known local communication technology. For example, if the communication link 5 (Figure 2) employs radio communication, the receiver 40 is a radio receiver circuit. If the communication link 5 is an infrared communication link, then the receiver 40 is an infrared receiver circuit. The receiver 40 may also include a decryption function to decipher any encrypted transmission from the client system 9.

The parser 41 is used to separate web addresses from other control inputs. In addition, the web address transmission may include more than just the web address information. It may include information regarding whether the web address is presented in the hypertext form, and if so, the user name of the hypertext. In this case, the parser 41 is used to separate the information into different data fields.

Referring back to Figure 2, the Internet radio receiver system 20 also includes a URL (Universal Resource Locator) beacon 26 coupled to the request module 29 to transmit a beacon signal containing the web address of the Internet radio station that is currently accessed by the Internet radio receiver system 20. This is to allow an external client system (e.g., the client system 9) to electronically receive the web address of the Internet radio station to which the Internet radio receiver system 20 is currently *tuned.* The URL beacon 26 receives the web address from the request module 29. This allows the web address of the external Internet radio station to be easily and conveniently transferred, in an error-free manner, to any external client system of the Internet radio receiver system 20.

Here, the term "*beacon*" (or URL beacon) is defined as a module that broadcasts or transmits the web address in accordance with a predetermined open standard communication protocol. The beacon 26 can be implemented by any known beacon that broadcasts or transmits signals (referred to as beacon signal).

In one embodiment, the beacon 26 constantly transmits the beacon signal. In another embodiment, the beacon 26 periodically transmits the beacon signal. Alternatively, the beacon 26 transmits the beacon signal whenever activated by external stimulus.

The transmission range of the beacon 26 is determined by the physical communication technology adopted by the beacon 26. In one embodiment, the communication technology employed by the beacon 26 can be a short range wireless technology such as infrared (e.g., the IrDA technology developed by several companies including Hewlett-Packard Company of Palo Alto, California), ultra-sound, or the low power, high frequency, short-range radio (2.4 - 5 GHz) transmission (e.g., the Bluetooth technology developed by several telecommunications and electronics companies).

If the beacon 26 has a wireless transmission capability, the beacon 26 can have a short or long transmission range. In one embodiment, the beacon 26 is a short range beacon. In this case, the transmission range of the beacon 26 can be approximately three to six feet. In another embodiment, the beacon 26 is a long range beacon.

It will be evident to those skilled in the art that various modifications and changes may be made thereto without departing from the broader scope of the invention.

The disclosures in United States patent application no. 09/704,480, from which this application claims priority, and in the abstract accompanying this application are incorporated herein by reference.

## Claims

1. An Internet radio/video receiver system (20), including:
a request module (29) operable to send a request to an external Internet radio/video station via Internet for its broadcasting content;
a radio/video subsystem (21) operable to receive the broadcasting content from the external Internet radio/video station via the Internet, and to play the broadcasting content;
a remote control receiver (26) coupled to the request module (29) and the radio/video subsystem (21) for receiving control inputs and web addresses from an external client system (9), and for sending the control inputs to the radio/video subsystem (21) and the web addresses to the request module (29).

2. A system as in claim 1, wherein the remote control receiver (26) includes:
a receiver (40) operable to receive a signal from the external client system (9);
a parser (41) coupled to the receiver (26), the request module (29) and the radio/video subsystem (21), wherein the parser (41) is operable to determine whether the signal received by the receiver contains a control input or a web address, to send the control input to the radio/video substation (21) and the web address to the request module (26).

3. a system as in claim 2, wherein the receiver (26) is settable in a constantly receiving mode to receive signals from the external client system (9) or to a mode in which it is only activated by external stimulus.

4. A system as in claim 1, wherein the control inputs include power control input, volume control input, audio frequency adjustment inputs and play mode control input.

5. A system as in any preceding claim, including a user interface (28) coupled to the request module (29) and the radio/video subsystem (21) to allow user of the Internet radio/video receiver system (21) to input the web addresses to the request module (29), and to input the control inputs to the audio subsystem (21).

6. A system as in any preceding claim, including a beacon (24) coupled to the request module (29) and operable to electronically transmit a beacon signal containing the web address of the Internet radio/video station at that time accessed by the system.

7. A system as in claim 6, wherein the beacon (24) has a predetermined transmission range.

8. A system as in claim 6, wherein the beacon (24) is operable periodically to transmit the beacon signal containing the web address or only when activated by external stimulus.
